# EUROPÄISCHE PATENTSCHRIFT

(11) **EP 3 146 605 B1**
(45) Veröffentlichungstag und Bekanntmachung des Hinweises auf die Patenterteilung: **10.10.2018**
(21) Anmeldenummer: 15713381.0
(22) Anmeldetag: 26.03.2015
(51) Int. Cl.: H02J 1/08, H02J 1/14, B60R 16/03, B60W 10/30

(54) **VERFAHREN ZUM BETRIEB EINES BORDNETZES EINES KRAFTFAHRZEUGS UND KRAFTFAHRZEUG**
METHOD FOR OPERATING AN ONBOARD POWER SUPPLY SYSTEM OF A MOTOR VEHICLE, AND MOTOR VEHICLE
PROCÉDÉ PERMETTANT DE FAIRE FONCTIONNER UN RÉSEAU DE BORD D'UN VÉHICULE AUTOMOBILE ET VÉHICULE AUTOMOBILE

(30) Priorität: 22.05.2014 DE 102014007548
(43) Veröffentlichungstag der Anmeldung: 29.03.2017
(73) Patentinhaber: Audi AG, 85045 Ingolstadt (DE)
(72) Erfinder: HACKNER, Thomas, 91171 Greding (DE); PFALLER, Stefan, 85072 Eichstätt (DE)
(74) Vertreter: Herbst, Matthias Heinz
(86) Internationale Anmeldenummer: PCT/EP2015/000651
(87) Internationale Veröffentlichungsnummer: WO 2015/176786

(56) Entgegenhaltungen:
- DE-A1- 1 630 963
- DE-A1- 10 211 970
- DE-A1-102006 028 823
- DE-A1-102012 202 009

## Beschreibung

Die Erfindung betrifft ein Verfahren zum Betrieb eines Bordnetzes eines Kraftfahrzeugs, welches Bordnetz wenigstens eine elektrische Energiequelle und wenigstens einen Verbraucher aufweist, wobei ein Teil der Verbraucher einer Sicherheitsgruppe von sicherheitsrelevanten Verbrauchern angehören, deren Betrieb auch bei starker Belastung des Bordnetzes sichergestellt sein soll, sowie ein Kraftfahrzeug.

In modernen Kraftfahrzeugen werden immer häufiger Hochleistungsverbraucher eingesetzt, um mechanische Systeme durch mechatronische zu ersetzen. Beispiele sind Fahrwerksysteme, Zustart-Systeme oder elektrische Pumpenaktuatoren. Beispiele für derartige Hochleistungsverbraucher sind elektrische Lenkuntersützungssysteme (EPS - Electric Power Steering), elektrische Turbolader oder auch beispielsweise einen riemengetriebenen Startergenerator (RSG) aufweisende 12 V-Zustartsysteme.

Die genannten Beispiele werden meist in einem 12 V-Bordnetz betrieben, jedoch sind auch Bordnetze anderer Spannungen denkbar und vorgeschlagen worden, die derartige Hochleistungsverbraucher versorgen können, beispielsweise Hochspannungs-Bordnetze oder 48 V-Bordnetze.

Das Bordnetz ist üblicherweise nicht ausgelegt, alle Verbraucher gleichzeitig mit maximaler Energie zu versorgen. Daher dürfen mehrere Hochleistungsverbraucher nicht gleichzeitig in Betrieb sein, um die Bordnetzstabilität nicht zu gefährden. Dies ist besonders wichtig bei sicherheitsrelevanten Systemen, beispielsweise der elektronischen Stabilitätskontrolle (ESC - Electronic Stability Control) oder elektrischer Lenkunterstützung, nachdem für diese eine kritische Bordnetzspannung existiert, bei deren Unterschreitung ein Ausfall der sicherheitsrelevanten Verbraucher auftreten kann, beispielsweise, indem dort ein Reset ausgelöst wird. So kann es beispielsweise bei ESC-Systemen vorkommen, dass unterhalb einer kritischen Bordnetzspannung von 8 V ein Reset ausgelöst wird.

Bekannte Bordnetze weisen häufig mehrere Energiequellen auf, beispielsweise Batterien, Generatoren und/oder DC-DC-Wandler (Gleichspannungswandler). Häufig werden Spannungseinbrüche im Bordnetz durch einen Startvorgang erzeugt, beispielsweise durch einen Start mit einem riemengetriebenen Startergenerator. In diesem Zusammenhang ist es bekannt, einen Spannungseinbruch im Bordnetz mit Hilfe eines Trennelements, beispielsweise einer Q-Diode, zu verhindern, so dass beispielsweise das Bordnetz und der riemengetriebene Startergenerator durch unterschiedliche Energiequellen versorgt werden. Ein derartiges zusätzliches Trennelement, insbesondere eine Q-Diode, muss nach anspruchsvollen Sicherheitsstandards, beispielsweise dem ASIL-Standard, entwickelt werden, um alle Sicherheitsanforderungen erfüllen zu können. Hierdurch entstehen hohe Kosten für das Trennelement.

EP 1 626 322 A1 betrifft ein Verfahren zum Verwalten des Energiebedarfs elektrischer Verbraucher in einem elektrischen Netz, in dem die Energieverteilung durch eine intelligente Ansteuerung der Verbraucher realisiert ist. Ein zentrales Steuergerät ist mit einer Kommunikationsleitung, dort einem CAN-Bus, mit den Verbrauchern, beispielsweise Heizverbrauchern, verbunden, und kann bei Bedarf gesteuert die Leistungsaufnahme von Verbrauchern reduzieren. Allerdings weisen moderne Hochleistungsverbraucher eine äußerst hohe Dynamik auf, so dass es, insbesondere bei Überlagerung von Leistungspulsen hochdynamischer Verbraucher, in äußerst kurzer Zeit zu einem Einbruch der Bordnetzspannung kommen kann, die zu einem Ausfall sicherheitsrelevanter Verbraucher führen kann. Beispielsweise kann es in modernen Kraftfahrzeugzeugen zu einer Überlagerung eines Starts mit einem riemengetriebenen Startergenerator und einer Lenkbewegung kommen, welche einen äußerst schnell auftretenden Einbruch der Bordnetzspannung zur Folge hat. Das durch EP 1 626 322 A1 beschriebene Energiemanagement kann die von den Verbrauchern aufgenommene Leistung aufgrund des zentralen Charakters nicht schnell genug reduzieren, um einen Spannungseinbruch tatsächlich zu verhindern.

DE 39 36 638 C1 betrifft ein Verfahren zur Sicherung der elektrischen Energieversorgung in einem Kraftfahrzeug, wobei die elektrischen Verbraucher, die für den sicheren Betrieb des Kraftfahrzeugs nicht zwingend notwendig sind, in Gruppen unterteilt werden, wobei die Verbraucher dieser einzelnen Gruppen in Abhängigkeit des Ladungszustands der Batterie abgeschaltet werden bzw. durch eine getaktete Bestromung nur eine reduzierte Leistung zur Verfügung gestellt bekommen. Auch dort wird die Bordnetzspannung zentral in einem Steuergerät erfasst und die Abschaltung erfolgt über eine Steuerleitung. Auch dies ist für die hohe Dynamik moderner Verbraucher, insbesondere von Hochleistungsverbrauchern, nicht mehr ausreichend schnell.

DE 10 2012 202 009 A1 betrifft ein Verfahren und eine Vorrichtung zur Spannungsstabilisierung in einem Kraftfahrzeugbordnetz. Dabei soll an zumindest einem Verbraucher mittels einer verbraucherseitigen Überwachungseinheit die an diesem Verbraucher anliegende Spannung überwacht werden, wobei beim Detektieren eines verbraucherseitigen Spannungsabfalls der entsprechende Verbraucher in einen leistungsreduzierten Betriebsmodus versetzt oder vollständig deaktiviert wird. Damit soll das Problem drastischer Spannungseinbrüche bei dynamischen Spitzenleistungsverbrauchern behandelt werden, wobei ein Grundgedanke ist, einen autonomen Mechanismus für die an ein elektrisches Netz angeschlossenen Verbraucher bzw. deren Steuereinheiten vorzusehen, der lokal und schnell selbständig eine Reduzierung der Energieentnahme aus dem elektrischen Netz auslösen kann.

DE 10 2006 028 823 A1 betrifft ein Stromversorgungsnetz mit integriertem Unterspannungsschutz in einem Passagierflugzeug, wobei von einem Stand der Technik ausgegangen wird, bei dem die Steuerung zentral erfolgt, so dass jeweils ein zusätzliches Kabel für die Übertragung von Messsignalen und ein zusätzliches Kabel für die Übertragung von Steuerungssignalen vorgesehen werden muss. Davon ausgehend soll der Verkabelungsaufwand und das entsprechende Gewicht der Kabel im Flugzeug minimiert werden, weshalb jeder Verbraucher mit einer eigenen, autarken Steuerung für den Abwurf von Einzellasten zu versehen ist, wobei die Versorgungsspannung in einer Gruppe von Einfülllasten an einem zentralen Punkt erfasst wird. Sinkt die Versorgungsspannung unter einen vorgegebenen Schwellenwert, werden bestimmte Einzellasten des Verbrauchers in ihrer Leistungsaufnahme reduziert oder ganz vom Netz genommen.

Der Erfindung liegt daher die Aufgabe zugrunde, eine Möglichkeit zur hochdynamischen Regelung der Leistungsaufnahme von elektrischen Verbrauchern anzugeben, um auch bei äußerst schnell auftretenden möglichen Spannungseinbrüchen einen Ausfall sicherheitsrelevanter Verbraucher möglichst zu vermeiden.

Zur Lösung dieser Aufgabe ist erfindungsgemäß ein Verfahren mit den Merkmalen des Anspruchs 1 vorgesehen.

Das bedeutet, die Verbraucher selbst überwachen den Spannungsschwellwert, weshalb sie hochdynamisch reagieren können. Dabei nutzt die vorliegende Erfindung aus, dass neue, hochdynamische Hochleistungsverbraucher die Möglichkeit besitzen, ihre Leistungsaufnahme eigenständig hochdynamisch zu reduzieren. Mithin wird innerhalb der Verbraucher selbst überwacht, ob eine Leistungsreduzierung oder gar eine Abschaltung erforderlich ist, um die Bordnetzspannung möglichst stabil zu halten. Dabei können Reaktionszeiten im Millisekundenbereich, beispielsweise also kleiner als 10 ms, erreicht werden, was im Rahmen einer zentralisierten Ansteuerung aufgrund der stattfindenden Berechnungen und der Kommunikation, welche meist über Bussysteme läuft, nicht möglich ist, da dann beispielsweise Zeiten im Bereich von 100 ms oder mehr erforderlich wären. Damit ist eine Leistungsaufnahme von elektrischen Verbrauchern deutlich hochdynamischer reduzierbar, als dies bei einem zentralen Ansteuern der elektrischen Verbraucher durch beispielsweise ein Zentralsteuergerät möglich wäre. Die Reduzierung der Leistungsaufnahme kann im Übrigen auch als "Derating" bezeichnet werden.

Dabei ist die vorliegende Erfindung sowohl auf 12 V-Bordnetze als auch auf Bordnetze anderer Nennspannungen, beispielsweise 48 V-Bordnetze oder Hochspannungs-Bordnetze, übertragbar.

Die Erfindung ermöglicht die Realisierung eines kostengünstigen stabilen Bordnetzes, da das Bordnetz nicht auf den Maximalstrom bzw. die Maximalleistungsaufnahme aller Verbraucher ausgelegt werden muss, sondern nur auf die maximale Leistungsaufnahme der sicherheitsrelevanten Verbraucher. Ein Trennelement, beispielsweise eine Q-Diode, ist nicht mehr nötig, wobei zusätzlich auch redundant vorhandene Energiespeicher eingespart werden, wie sie beispielsweise bei einer Freilauf-Motor-Aus (FMA)-Funktion häufig eingesetzt werden, beispielsweise als eine zu einer Bleibatterie parallel geschaltete Lithiumbatterie.

Dabei wird darauf hingewiesen, dass das Absenken der Leistungsaufnahme auch von sicherheitsrelevanten Verbrauchern durchgeführt werden kann, wenn dies notwendig wird. Eine elektrische Lenkunterstützung benötigt für ein komfortables Lenken im Stand des Kraftfahrzeugs eine hohe elektrische Leistung. Im Fehlerfall, oder wenn die verfügbare Leistungsreserve knapp ist, kann die Leistung reduziert werden.

Dabei werden die Spannungsschwellwerte durch ein zentrales Steuergerät vorgegeben. Dies ist bei den erfindungsgemäß veränderlichen Spannungsschwellwerten zweckmäßig, auf die im Folgenden noch näher eingegangen werden wird. Dann kann im zentralen Steuergerät die (üblicherweise nur langsam veränderliche) Gesamtsituation bzw. der Betriebszustand des Bordnetzes analysiert werden, und die Spannungsschwellwerte können durch ein derartiges zentrales Energiemanagement an die Verbraucher kommuniziert werden, beispielsweise über ein Bussystem. Zwar ist diese Kommunikation träge, jedoch reduzieren bei einem hochdynamischen Spannungseinbruch die einzelnen Verbraucher autonom anhand der vorgegebenen Spannungsschwellwerte ihre Leistungsaufnahme, so dass äußerst schnell reagiert wird.

Im Rahmen der vorliegenden Erfindung kann vorgesehen sein, dass für wenigstens einen Verbraucher die Leistungsaufnahme bei Unterschreiten des Spannungsschwellwerts, insbesondere durch Ausschalten des Verbrauchers, auf Null gesenkt wird, und/oder für wenigstens einen Verbraucher die Leistungsaufnahme gemäß einer von der Unterschreitung des Spannungsschwellwerts abhängigen Kennlinie abgesenkt wird, wobei insbesondere bei einem Grenzwert für die Bordnetzspannung die Leistungsaufnahme auf Null reduziert ist. In einer einfachen Ausgestaltung der vorliegenden Erfindung kann also vorgesehen sein, dass Verbraucher gänzlich ausgeschaltet werden, sobald der Spannungsschwellwert unterschritten wird. Es ist jedoch auch denkbar, die Reduzierung der Leistungsaufnahme, beispielsweise schrittweise, anhand einer Kennlinie vorzunehmen, bei der insbesondere oberhalb des Spannungsschwellwerts 100 % der benötigten Leistung aus dem Bordnetz entnommen wird, dieser Prozentsatz jedoch bei Unterschreitung des Spannungsschwellwerts absinkt, bis beispielsweise bei einem Grenzwert für die Bordnetzspannung die Leistungsaufnahme gänzlich auf Null reduziert ist. Eine derartige Kennlinie kann bevorzugt linear sein, das bedeutet, dass mit Erreichen des Spannungsschwellwerts die Leistungsaufnahme linear bis zu dem Grenzwert abfallen kann. Dabei wird darauf hingewiesen, dass die Spannungsschwellwerte üblicherweise auch vom Verbraucher selbst abhängig sind, was analog für den genannten Grenzwert zur vollständigen Abschaltung gilt, so dieser vorhanden ist.

Die Spannungsschwellwerte werden in Abhängigkeit eines Betriebszustands des Kraftfahrzeugs gewählt. Zusätzlich können die Spannungsschwellwerte in Abhängigkeit der Eigenschaften des Verbrauchers und/oder der Belastbarkeit der wenigstens einen Energiequelle gewählt werden, und/oder die Spannungsschwellwerte können derart gewählt werden, dass eine kritische Bordnetzspannung aufgrund der Reduzierung der Leistungsaufnahme nicht unterschritten wird. Die Spannungsschwellwerte, die, wie beschrieben, von einem zentralen Steuergerät als Energiemanagement auf den aktuellen Betriebszustand des Bordnetzes bzw. des Kraftfahrzeugs angepasst werden, sind in ihrer konkreten Ausgestaltung selbstverständlich stark von der Auslegung der Verbraucher selbst sowie des Bordnetzes abhängig. Ihre zeitliche Veränderlichkeit bestimmt sich dabei hauptsächlich durch den Betriebszustand des Kraftfahrzeugs, insbesondere den Zustand des Bordnetzes, wobei ein wesentlicher Einflussfaktor die aktuelle Belastungsfähigkeit der wenigstens einen Energiequelle des Bordnetzes betrifft. Weitere zu beachtende Umstände können Rekuperationszustände und dergleichen sein.

Als Eigenschaften der Energiequelle können zweckmäßigerweise deren Zustand beschreibende Größen, insbesondere eine deren Temperatur beschreibende Größe und/oder eine deren Alter beschreibende Größe, berücksichtigt werden. Als Temperatur kann beispielsweise auch die Umgebungstemperatur des Kraftfahrzeugs herangezogen werden, welche häufig ohnehin vorliegt. Dabei kann eine warme Batterie beispielsweise mehr Strom liefern, so dass die Spannungsschwellwerte niedriger gewählt werden können, dennoch jedoch einen gewisser Puffer erhalten bleibt. Auch das Alter einer Energiequelle, insbesondere einer Batterie, kann relevant sein, da neue Batterien meist eine größere Leistungsabgabe erlauben als ältere Batterien. Insgesamt ist es, wie bereits angedeutet wurde, zweckmäßig, die Spannungsschwellwerte in Abhängigkeit der Belastungsfähigkeit der Energiequellen des Bordnetzes zu wählen.

Zweckmäßige Spannungsschwellwerte ändern sich dabei auf einer deutlich langsameren Zeitskala als die, auf der hochdynamische Spannungseinbrüche bei Verwendung hochdynamischer Hochleistungsverbraucher auftreten können, so dass die Spannungsschwellwerte problemlos in einem Energiemanagement eines zentralen Steuergeräts verwaltet werden können und von dort beispielsweise zyklisch aktualisiert den Verbrauchern zur Verfügung gestellt werden können. Dennoch ist durch das eigenständige Derating der Verbraucher eine schnelle Reaktion auf hochdynamische Änderungen möglich.

Eine besonders vorteilhafte Ausgestaltung der vorliegenden Erfindung sieht vor, dass über die Wahl der Spannungsschwellwerte eine Priorisierung der Verbraucher vorgenommen wird. Beispielsweise kann mithin vorgesehen sein, dass Verbrauchern der Sicherheitsgruppe niedrigere Spannungsschwellwerte als sonstigen Verbrauchern zugeordnet werden und/oder die Spannungsschwellwerte so vorgegeben werden, dass die Leistungsaufnahme der Verbraucher bei sicherheitsrelevanteren Verbrauchern später reduziert wird als bei weniger sicherheitsrelevanten Verbrauchern. So ist es mithin denkbar, dass nur für den Komfort relevante Verbraucher ihre Leistung bei einer höheren Spannungsschwelle reduzieren, betriebsrelevante, jedoch nicht zwangsläufig sicherheitsrelevante Verbraucher ihre Leistung bei einem niedrigeren Spannungsschwellwert. Damit steht den sicherheitsrelevanten Verbrauchern die gesamte verfügbare Leistung des Bordnetzes zur Verfügung, was im Übrigen auch eine kostengünstigere Auslegung des Bordnetzes erlaubt. Wie bereits erwähnt wurde, ist es aber auch denkbar, auch innerhalb der Gruppe der sicherheitsrelevanten Verbraucher Abstufungen vorzunehmen, beispielsweise einige sicherheitsrelevante Verbraucher mit Spannungsschwellwerten bzw. höheren Spannungsschwellwerten als andere sicherheitsrelevante Verbraucher zu versehen.

Dabei sei an dieser Stelle noch allgemein angemerkt, dass die Sicherheitsrelevanz von Verbrauchern durch ein Gefährdungspotential bei Ausfall beschrieben werden kann. Dann ist ein Sicherheitsschwellwert für die Aufnahme in die Sicherheitsgruppe denkbar, wobei die Sicherheitsrelevanz auch dynamisch bestimmbar sein kann, insbesondere in Abhängigkeit des Betriebszustands des Kraftfahrzeugs.

Es kann ferner vorgesehen sein, dass für wenigstens zwei, insbesondere nicht oder nur wenig sicherheitsrelevante Verbraucher ein gleicher Spannungsschwellwert gewählt wird. Auf dieser Weise lässt sich die grundsätzlich ohnehin gegebene Redundanz der vorliegenden Erfindung, nämlich das letztlich unabhängige Reduzieren der Leistungsaufnahme je nach der Bordnetzspannung, weiter verbessern, so dass auch dann, wenn ein Verbraucher wider Erwarten seine Leistungsaufnahme nicht reduziert, dafür die Leistungsaufnahme eines anderen Verbrauchers reduziert werden kann. Für diese im Rahmen der vorliegenden Erfindung gegebene Redundanz sind nicht zwangsläufig exakt gleiche Spannungsschwellwerte bei unterschiedlichen Verbrauchern erforderlich, denn sollte ein Verbraucher seine Leistungsaufnahme nicht reduzieren, dürfte dies zu einem weiteren Einbruch der Bordnetzspannung führen, so dass andere Verbraucher ihre Leistungsaufnahme früher und/oder stärker reduzieren als bei aufgrund des Spannungsschwellwerts vorgesehener Soll-Leistungsaufnahmereduzierung des Verbrauchers, der seine Leistung wider Erwarten nicht reduziert hat. Durch diese Redundanz kann eine Erniedrigung der Sicherheitsanforderungen an die einzelnen Verbraucher begründet werden.

In einer zweckmäßigen Weiterbildung der vorliegenden Erfindung ist vorgesehen, dass die Bordnetzspannung an einem Bezugspunkt gemessen wird, insbesondere an einer der wenigstens einen Energiequelle oder an einer wenigstens einem Verbraucher der Sicherheitsgruppe zugeordneten Zuleitung oder einem Anschlusspunkt dieser Zuleitung. Es wird mithin ein fest definierter Bezugspunkt für die Messung der Bordnetzspannung vorgeschlagen, insbesondere die Energiequelle, beispielsweise eine 12 V-Batterie, oder ein Knotenpunkt zu den sicherheitsrelevanten Verbrauchern. Die Nutzung eines derartigen Bezugspunktes ist zweckmäßig, da durch die hochdynamischen Verbraucher die Spannung im Bordnetz auch räumlich nicht mehr zwangsläufig konstant ist.

Die Bordnetzspannung kann durch die Verbraucher selbst vermessen werden, insbesondere unter Verwendung einer Sensierleitung zu dem Bezugspunkt, und/oder eine Ermittlung der Bordnetzspannung kann durch ein bzw. das zentrale Steuergerät erfolgen, welches die Bordnetzspannung an die Spannungsschwellwerte überwachenden Verbraucher übermittelt. Mithin kann vorgesehen sein, dass die Verbraucher selbst die Bordnetzspannung erfassen, beispielsweise durch Verwendung einer Sensierleitung (Sense-Leitung) zu dem fest definierten Bezugspunkt. Anstelle der Verwendung solcher Sensierleitungen kann der Spannungsabfall, beispielsweise an der Zuleitung zu wenigstens einem sicherheitsrelevanten Verbraucher, auch im zentralen Steuergerät berechnet werden, wozu der Strom und die Eingangsspannung gemessen werden. Ist die Impedanz der Zuleitung bekannt, kann die Bordnetzspannung hieraus berechnet werden. Derartige Berechnungen sind schnell möglich, wobei zur Übertragung dann zweckmäßigerweise spezielle Übertragungsleitungen eingesetzt werden, um eine träge Übermittlung, beispielsweise über ein Bussystem, zu vermeiden, und die hochdynamische Reaktion des Gesamtsystems nicht in Frage zu stellen. Bevorzugt ist es im Rahmen der vorliegenden Erfindung jedoch, wenn auch die Bordnetzspannung zum Vergleich mit den Spannungsschwellwerten unmittelbar durch die Verbraucher erfasst wird, die Spannungsschwellwerte überwachen.

Als sicherheitsrelevante Verbraucher können wenigstens ein das Fahrwerk beeinflussender Verbraucher und/oder wenigstens ein die Lenkung beeinflussender Verbraucher und/oder wenigstens ein die Bremsen beeinflussender Verbraucher verwendet werden. Ferner kann als Verbraucher auch ein Startergenerator, insbesondere ein riemengetriebener Startergenerator, verwendet werden, welcher für Spannungseinbrüche im Bordnetz verantwortlich sein kann.

Neben dem Verfahren betrifft die vorliegende Erfindung auch ein Kraftfahrzeug, aufweisend ein Bordnetz mit wenigstens einer elektrischen Energiequelle und wenigstens einem Verbraucher, wobei ein Teil der Verbraucher einer Sicherheitsgruppe von sicherheitsrelevanten Verbrauchern angehören, deren Betrieb auch bei starker Belastung des Bordnetzes sichergestellt sein soll, aufweisend wenigstens eine zur Durchführung des erfindungsgemäßen Verfahrens ausgebildete Steuereinrichtung. Sämtliche Ausführungen bezüglich des erfindungsgemäßen Verfahrens lassen sich analog auf das erfindungsgemäße Kraftfahrzeug übertragen.

Die Steuereinrichtung umfasst dabei ein zentrales Steuergerät, welches durch eine Analyse des Betriebszustandes des Kraftfahrzeugs, insbesondere des Bordnetzes, Spannungsschwellwerte für die Verbraucher bestimmt, die ihre Leistungsaufnahme durch Abschalten oder anhand einer Linie reduzieren können sollen. In diese Bestimmung der Spannungsschwellwerte im zentralen Steuergerät kann auch die Priorisierung bestimmter Verbraucher bereits eingehen, so dass zuerst komfortrelevante Verbraucher ihre Leistungsaufnahme reduzieren, dann betriebs-, jedoch nicht sicherheitsrelevante Verbraucher und erst zuletzt bei entsprechender Ausgestaltung ein Teil der sicherheitsrelevanten Verbraucher. Die bestimmten Spannungsschwellwerte werden dann vom zentralen Steuergerät über ein Bussystem oder sonstige Kommunikationsleitungen an die Verbraucher weitergegeben, welche selbsttätig überwachen, ob die Bordnetzspannung den Spannungsschwellwert unterschreitet und mithin Maßnahmen zur Reduzierung der Leistungsaufnahme erforderlich sind. So können die Verbraucher hochdynamisch auf Spannungseinbrüche reagieren und die Spannung insbesondere oberhalb einer kritischen Bordnetzspannung halten, unterhalb derer der Ausfall von sicherheitsrelevanten Verbrauchern drohen würde.

In einem zentralen Steuergerät kann die Bestimmung der Spannungsschwellwerte im Rahmen einer Gesamtsystemanalyse erfolgen. Dabei kann eine kritische Bordnetzspannung, welche die höchste Bordnetzspannung sein kann, bei der ein sicherheitsrelevanter Verbraucher ausfallen kann, berücksichtigt werden. Diese kritische Bordnetzspannung soll möglichst nie unterschritten werden. Im Rahmen einer Gesamtsystemanalyse kann dann die aktuelle Belastungsfähigkeit der Energiequellen des Bordnetzes genauso überprüft werden wie festgestellt werden kann, welcher Verbraucher gerade wie wichtig bzw. sogar sicherheitsrelevant ist. Im kritischen Fall erfolgt eine kaskadierte Reduzierung der Leistungsaufnahme, insbesondere wenigstens teilweise Abschaltung, wobei insbesondere zunächst komfortrelevante Verbraucher ihre Leistungsaufnahme reduzieren, erst danach sonstige Verbraucher.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines Bordnetzes,
- Fig. 2: eine mögliche Kennlinie für eine elektrische Lenkunterstützung, und
- Fig. 3: ein erfindungsgemäßes Kraftfahrzeug.

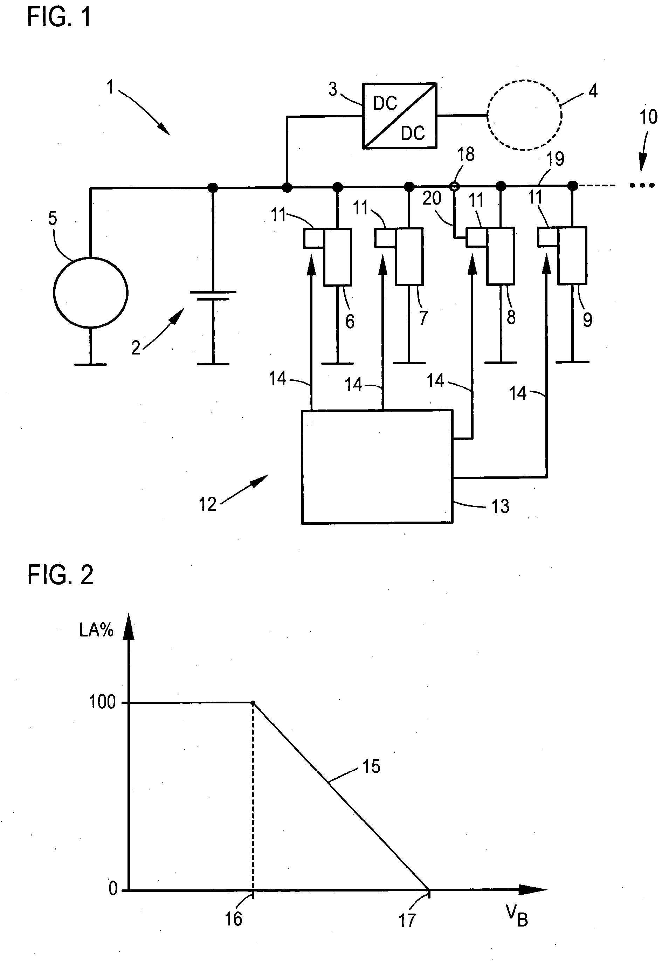

Fig. 1 zeigt eine Prinzipskizze eines Bordnetzes 1 eines Kraftfahrzeugs, hier eines 12 V-Bordnetzes. Das Bordnetz 1 weist als Energiequellen vorliegend eine 12 V-Batterie 2 und einen Gleichspannungswandler 3 auf, der das Bordnetz 1 mit einem Hochspannungsnetz 4 verbindet. Neben einem riemengetriebenen Startergenerator 5 weist das Bordnetz 1 ferner weitere Verbraucher 6, 7, 8, 9 auf, wobei selbstverständlich auch mehr Verbraucher vorgesehen sein können, wie durch die Fortsetzungspunkte 10 symbolisiert ist.

Bei den Verbrauchern 8 und 9 handelt es sich vorliegend um sicherheitsrelevante Verbraucher, das bedeutet, ihr Ausfall bringt einen ein Sicherheitsschwellwert überschreitendes Gefährdungspotential für das Kraftfahrzeug, in dem das Bordnetz 1 vorhanden ist, mit sich. Beispielsweise kann es sich bei dem Verbraucher 8 um eine elektrische Lenkunterstützung, bei dem Verbraucher 9 um ein ESC-System handeln. Die Verbraucher 8 und 9 gehören mithin einer Sicherheitsgruppe von sicherheitsrelevanten Verbrauchern an. Für das ESC-System, also im Beispiel den Verbraucher 9, ist bekannt, dass dieses ausfällt, wenn die Bordnetzspannung unter 8 V fällt. Auch für den Verbraucher 8 gibt es eine derartige kritische Spannung, die jedoch niedriger liegt als beim Verbraucher 9. Vorliegend soll mithin das Bordnetz 1 so betrieben werden, dass die Bordnetzspannung möglichst nie unter die kritische Bordnetzspannung von 8 V fällt, bei der ein Ausfall des ESC-Systems 9 (und gegebenenfalls auch der elektrischen Lenkunterstützung 8) auftritt.

Die elektrischen Verbraucher 6 und 7 sind weniger oder gar nicht sicherheitsrelevant, beispielsweise Komfortsysteme wie Heizeinrichtungen oder dergleichen. Um nun, beispielsweise bei Betrieb des riemengetriebenen Startergenerators 5, einen zu starken Spannungseinbruch im Bordnetz 1 zu vermeiden, sind die Verbraucher 6, 7, 8 und 9 mit Überwachungseinrichtungen 11 versehen, die es erlauben, hochdynamisch die Leistungsaufnahme des jeweiligen Verbrauchers zu reduzieren, wenn ein verbraucherspezifischer Spannungsschwellwert unterschritten wird. Die Überwachungseinrichtungen 11 bilden Teil einer Steuereinrichtung 12, zu der auch ein zentrales Steuergerät 13 gehört. In dem zentralen Steuergerät 13 werden zeitaktuell die Spannungsschwellwerte ermittelt und über Kommunikationsleitungen 14, beispielsweise ein Bussystem, an die Überwachungseinrichtungen 11 übermittelt. Die Spannungsschwellwerte werden dabei so bestimmt, dass die kritische Bordnetzspannung nicht durch die Bordnetzspannung unterschritten wird, wobei zusätzlich eine Priorisierung der Verbraucher 6, 7, 8, 9 vorgegeben ist, nach der zunächst komfortrelevante Verbraucher ihre Leistungsaufnahme reduzieren sollen, danach betriebsrelevante, jedoch nicht sicherheitsrelevante Verbraucher und erst im Notfall eine Leistungsaufnahme der sicherheitsrelevanten Verbraucher 8, 9 bzw. wenigstens eines sicherheitsrelevanten Verbrauchers 8, 9 reduziert werden soll. Die Spannungsschwellwerte sind ferner abhängig von Eigenschaften der Verbraucher und dem Betriebszustand des Kraftfahrzeugs, konkret des Bordnetzes 1, wobei zu einem größeren Anteil die Belastungsfähigkeit der Energiequellen, also der Batterie 2 und des Gleichspannungswandlers 3, eingeht. Ist beispielsweise die Batterie 2 warm, ist sie höher belastbar und die Spannungsschwellwerte können niedriger gewählt werden.

Die Spannungsschwellwerte verändern sich in der Regel auf einer langsameren Zeitskala als die hochdynamischen Spannungseinbrüche auftreten können, so dass die langsamere Berechnung und Ermittlung an die Verbraucher 6, 7, 8, 9 der hochdynamischen Reaktion auf Spannungseinbrüche durch die Verbraucher 6, 7, 8, 9 selbst nicht entgegensteht.

Die Verbraucher 6, 7, 8, 9 können zur Reduzierung ihrer Leistungsaufnahme gänzlich abgeschaltet werden, aber auch über ein bestimmtes Spannungsintervall schrittweise oder kontinuierlich, also bestimmt durch eine Kennlinie.

Eine beispielhafte Kennlinie 15 ist im Graphen der Fig. 2 für eine elektrische Lenkunterstützung gezeigt, wobei die Leistungsaufnahme (LA) im prozentualen Anteil von der gewünschten Leistungsaufnahme gegen die Bordnetzspannung V_{B} gezeigt ist. Ab dem Spannungsschwellwert 16, der beispielsweise im Bereich von 11V liegen kann, sinkt die Leistungsaufnahme linear ab, bis an einem Grenzwert 17 der Verbraucher gänzlich abgeschaltet ist. Der Grenzwert 17 für die Bordnetzspannung kann beispielsweise im Bereich von 7 V liegen.

Im in Fig. 1 dargestellten Ausführungsbeispiel wird die Bordnetzspannung an einem klar definierten Bezugspunkt 18 vermessen, vorliegend an einer Zuleitung 19 zu den sicherheitsrelevanten Verbrauchern 8, 9. Im Ausführungsbeispiel wird die Bordnetzspannung ferner durch die Überwachungseinrichtungen 11 selbst bestimmt, um möglichst schnell reagieren zu können, wozu Sensierleitungen 20 zu dem Bezugspunkt 18 geführt sind, welche vorliegend der Einfachheit halber nur für den Verbraucher 8 gezeigt sind, jedoch bei allen Überwachungseinrichtungen 11 vorliegen.

Es ist bereits ersichtlich, dass im Bordnetz 1 bei der Reduzierung der Leistungsaufnahme eine gewisse Redundanz gegeben ist, da selbst dann, wenn ein Verbraucher seine Leistungsaufnahme wider Erwarten nicht reduziert, beispielsweise aufgrund einer Fehlfunktion in der Überwachungseinrichtung 11, dies andere Verbraucher dennoch tun. Eine solche Redundanz kann forciert werden, wenn für einzelne Verbraucher gleiche Spannungsschwellwerte gewählt werden.

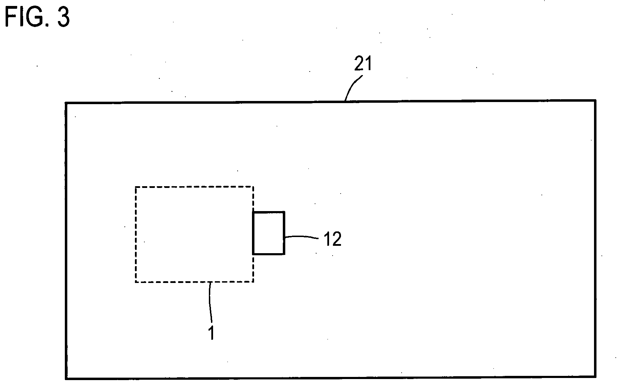

Fig. 3 zeigt schließlich eine stark vereinfachte Prinzipskizze eines erfindungsgemäßen Kraftfahrzeugs 21, welches das Bordnetz 1 und ihm zugeordnet die Steuereinrichtung 12 umfasst. Die Steuereinrichtung 12 ist dabei, wie dargelegt wurde, zur Durchführung des erfindungsgemäßen Verfahrens ausgebildet.

## Patentansprüche

1. Verfahren zum Betrieb eines Bordnetzes (1) eines Kraftfahrzeugs (21), welches Bordnetz (1) wenigstens eine elektrische Energiequelle und wenigstens einen Verbraucher (6, 7, 8, 9) aufweist, wobei ein Teil der Verbraucher (6, 7, 8, 9) einer Sicherheitsgruppe von sicherheitsrelevanten Verbrauchern (8, 9) angehören, deren Betrieb auch bei starker Belastung des Bordnetzes (1) sichergestellt sein soll, wobei für wenigstens einen Teil der Verbraucher (6, 7, 8, 9), insbesondere alle Verbraucher (6, 7, 8, 9), jeweils wenigstens ein Spannungsschwellwert (16) vorgegeben wird, wobei durch jeden Verbraucher (6, 7, 8, 9) selbst überwacht wird, ob die Bordnetzspannung den Spannungsschwellwert (16) unterschreitet, und bei durch die Bordnetzspannung unterschrittenem Spannungsschwellwert (16) die Leistungsaufnahme des jeweiligen Verbrauchers (6, 7, 8, 9) durch den Verbraucher (6, 7, 8, 9) selbst reduziert wird, **dadurch gekennzeichnet,**
**dass** die zeitlich veränderlichen Spannungsschwellwerte (16) durch ein zentrales Steuergerät (13) in Abhängigkeit eines Betriebszustands des Kraftfahrzeugs (21) gewählt werden und an die Verbraucher (6, 7, 8, 9) vorgegeben werden.

2. Verfahren nach Anspruch 1,
**dadurch gekennzeichnet,**
**dass** die Spannungsschwellwerte (16) zusätzlich in Abhängigkeit der Eigenschaften des Verbrauchers (6, 7, 8, 9) und/oder der Belastbarkeit der wenigstens einen Energiequelle gewählt werden und/oder die Spannungsschwellwerte (16) derart gewählt werden, dass eine kritische Bordnetzspannung aufgrund der Reduzierung der Leistungsaufnahme nicht unterschritten wird.

3. Verfahren nach Anspruch 2,
**dadurch gekennzeichnet,**
**dass** als die Belastbarkeit der Energiequelle beschreibende Eigenschaften der Energiequelle deren Zustand beschreibende Größen, insbesondere eine deren Temperatur beschreibende Größe und/oder eine deren Alter beschreibende Größe, berücksichtigt werden.

4. Verfahren nach einem der vorangehenden Ansprüche,
**dadurch gekennzeichnet,**
**dass** über die Wahl der Spannungsschwellwerte (16) eine Priorisierung der Verbraucher (6, 7, 8, 9) vorgenommen wird.

5. Verfahren nach Anspruch 4,
**dadurch gekennzeichnet,**
**dass** Verbrauchern (8, 9) der Sicherheitsgruppe niedrigere Spannungsschwellwerte (16) als sonstigen Verbrauchern (6, 7) zugeordnet werden und/oder die Spannungsschwellwerte (16) so vorgegeben werden, dass die Leistungsaufnahme der Verbraucher (6, 7, 8, 9) bei sicherheitsrelevanteren Verbrauchern (6, 7, 8, 9) später reduziert wird als bei weniger sicherheitsrelevanten Verbrauchern (6, 7, 8, 9).

6. Verfahren nach einem der vorangehenden Ansprüche,
**dadurch gekennzeichnet,**
**dass** für wenigstens zwei, insbesondere nicht oder wenig sicherheitsrelevante, Verbraucher (6, 7, 8, 9) ein gleicher Spannungsschwellwert (16) gewählt wird.

7. Verfahren nach einem der vorangehenden Ansprüche,
**dadurch gekennzeichnet,**
**dass** die Bordnetzspannung an einem Bezugspunkt (18) gemessen wird, insbesondere an einer der wenigstens einen Energiequelle oder an einer wenigstens einem Verbraucher (8 , 9) der Sicherheitsgruppe zugeordneten Zuleitung (19) oder einem Anschlusspunkt dieser Zuleitung (19).

8. Verfahren nach einem der vorangehenden Ansprüche,
**dadurch gekennzeichnet,**
**dass** die Bordnetzspannung durch die Verbraucher (6, 7, 8, 9) selbst vermessen wird, insbesondere unter Verwendung einer Sensierleitung (20) zu dem Bezugspunkt (18), und/oder eine Ermittlung der Bordnetzspannung durch das zentrale Steuergerät (13) erfolgt, welches die Bordnetzspannung an die Spannungsschwellwerte (16) überwachenden Verbraucher (6, 7, 8, 9) übermittelt.

9. Verfahren nach einem der vorangehenden Ansprüche,
**dadurch gekennzeichnet,**
**dass** als sicherheitsrelevante Verbraucher (8, 9) wenigstens ein das Fahrwerk beeinflussender Verbraucher (9) und/oder wenigstens ein die Lenkung beeinflussender Verbraucher (8) und/oder wenigstens ein die Bremsen beeinflussender Verbraucher verwendet werden.

10. Verfahren nach einem der vorangehenden Ansprüche,
**dadurch gekennzeichnet,**
**dass** als Verbraucher wenigstens ein Startergenerator (5) verwendet wird.

11. Kraftfahrzeug (21), umfassend ein Bordnetz (1) mit wenigstens einer elektrischen Energiequelle und wenigstens einem Verbraucher (6, 7, 8, 9), wobei ein Teil der Verbraucher (6, 7, 8, 9) einer Sicherheitsgruppe von sicherheitsrelevanten Verbrauchern (8, 9) angehören, deren Betrieb auch bei starker Belastung des Bordnetzes (1) sichergestellt sein soll, aufweisend wenigstens eine zur Durchführung eines Verfahrens nach einem der vorangehenden Ansprüche ausgebildete Steuereinrichtung (12).

## Claims

1. Method for operating an electrical system (1) of a vehicle (21), said electrical system comprising at least one electrical power source and at least one consumer (6, 7, 8, 9), wherein some of the consumers (6, 7, 8, 9) belong to a safety group of safety-relevant consumers (8, 9), the operation of which should also be ensured when the electrical system (1) is under heavy load, wherein in each case at least one voltage threshold value (16) is specified for at least some of the consumers (6, 7, 8, 9), in particular all the consumers (6, 7, 8, 9), wherein each consumer (6, 7, 8, 9) itself monitors whether the electrical system voltage falls below the voltage threshold value (16), and if the electrical system voltage falls below the voltage threshold value (16) the power consumption of the respective consumer (6, 7, 8, 9) is reduced by the consumer (6, 7, 8, 9) itself, **characterised in that** the temporally changing voltage threshold values (16) are selected by a central control device (13) depending on an operating state of the vehicle (21) and are preset at the consumers (6, 7, 8, 9).

2. Method according to claim 1,
**characterised in that**
the voltage threshold values (16) are additionally chosen depending on the properties of the consumer (6, 7, 8, 9) and/or the load capacity of the at least one power source and/or the voltage threshold values (16) are chosen so that the voltage does not fall below a critical electrical system voltage on account of the reduction of the power consumption.

3. Method according to claim 2,
**characterised in that**
as properties of the power source describing the load capacity of the power source, quantities describing its state, in particular a quantity describing its temperature and/or a quantity describing its age, are taken into account.

4. Method according to any one of the preceding claims,
**characterised in that**
a prioritisation of the consumers (6, 7, 8, 9) is carried out via the choice of the voltage threshold values (16).

5. Method according to claim 4,
**characterised in that**
lower voltage threshold values (16) are allocated to consumers (8, 9) of the safety group than to other consumers (6, 7), and/or the voltage threshold values (16) are predetermined so that the power consumption of the consumers (6, 7, 8, 9) in the case of the safety-relevant consumers (6, 7, 8, 9) is reduced than in the case of less safety-relevant consumers (6, 7, 8, 9).

6. Method according to any one of the preceding claims,
**characterised in that**
a same voltage threshold value (16) is selected for at least two consumers, in particular that are not or are slightly safety-relevant consumers (6, 7, 8, 9).

7. Method according to any one of the preceding claims,
**characterised in that**
the electrical system voltage is measured at a reference point (18), in particular on a line (19) allocated to the at least one power source or on a line allocated to at least one consumer (8, 9) of the safety group, or at a connection point of this line (19).

8. Method according to any one of the preceding claims,
**characterised in that**
the electrical system voltage is measured by the consumers (6, 7, 8, 9) themselves, in particular using a sensing line (20) at the reference point (18), and/or a determination of the electrical system voltage is carried out by the central control device (13), which transmits the electrical system voltage to consumers (6, 7, 8, 9) monitoring the voltage threshold values (16).

9. Method according to any one of the preceding claims,
**characterised in that**
as safety-relevant consumers (8, 9) at least one consumer (9) is used influencing the running gear and/or at least one consumer (8) influencing the steering and/or at least one consumer influencing the braking.

10. Method according to any one of the preceding claims,
**characterised in that**
at least one starter generator (5) is used as consumer.

11. Vehicle (21), comprising an electrical system (1) with at least one electrical power source and at least one consumer (6, 7, 8, 9), wherein some of the consumers (6, 7, 8, 9) belong to a safety group of safety-relevant consumers (8, 9), whose operation should be ensured also when the electrical system (1) is under heavy load, comprising at least one control device (12) designed to implement a method according to any one of the preceding claims.

## Revendications

1. Procédé de fonctionnement d'un réseau de bord (1) d'un véhicule automobile (21), lequel réseau de bord (1) présente au moins une source d'énergie électrique et au moins un consommateur (6, 7, 8, 9), dans lequel une partie des consommateurs (6, 7, 8, 9) appartient à un groupe de sécurité de consommateurs (8, 9) susceptibles de présenter un problème de sécurité, dont le fonctionnement doit aussi être assuré en cas de forte charge du réseau de bord (1), dans lequel pour au moins une partie des consommateurs (6, 7, 8, 9), en particulier tous les consommateurs (6, 7, 8, 9), respectivement au moins une valeur seuil de tension (16) est prédéfinie, dans lequel chaque consommateur (6, 7, 8, 9) même surveille si la tension de réseau de bord n'atteint pas la valeur seuil de tension (16), et en cas de tension de réseau de bord n'atteignant pas la valeur seuil de tension (16), la puissance absorbée du consommateur (6, 7, 8, 9) respectif est réduite par le consommateur (6, 7, 8, 9) même, **caractérisé en ce que** les valeurs seuil de tension (16) modifiables temporellement sont choisies par un appareil de commande central (13) en fonction d'un état de fonctionnement du véhicule automobile (21) et sont prédéfinies pour les consommateurs (6, 7, 8, 9).

2. Procédé selon la revendication 1,
**caractérisé en ce**
**que** les valeurs seuil de tension (16) sont choisies en outre en fonction des propriétés du consommateur (6, 7, 8, 9) et/ou la capacité de charge de l'au moins une source d'énergie et/ou les valeurs seuil de tension (16) sont choisies de telle manière qu'une tension de réseau de bord critique ne soit pas atteinte en raison de la réduction de la puissance absorbée.

3. Procédé selon la revendication 2,
**caractérisé en ce**
**que** comme propriétés de la source d'énergie décrivant la capacité de charge de la source d'énergie, des grandeurs décrivant son état, en particulier une grandeur décrivant sa température et/ou une grandeur décrivant son âge, sont prises en considération.

4. Procédé selon l'une quelconque des revendications précédentes,
**caractérisé en ce**
**qu'**une priorisation des consommateurs (6, 7, 8, 9) est entreprise par le choix des valeurs seuil de tension (16).

5. Procédé selon la revendication 4
**caractérisé en ce**
**que** des valeurs seuil de tension (16) plus faibles sont associées à des consommateurs (8, 9) du groupe de sécurité qu'à d'autres consommateurs (6, 7) et/ou les valeurs seuil de tension (16) sont prédéfinies de sorte que la puissance absorbée des consommateurs (6, 7, 8 ,9) soit réduite plus tard en cas de consommateurs (6,7, 8, 9) susceptibles de présenter un problème de sécurité qu'en cas de consommateurs (6, 7, 8, 9) moins susceptibles de présenter un problème de sécurité.

6. Procédé selon l'une quelconque des revendications précédentes,
**caractérisé en ce**
**qu'**une valeur seuil de tension (16) identique est choisie pour au moins deux consommateurs (6, 7, 8, 9), en particulier non ou moins susceptibles de présenter un problème de sécurité.

7. Procédé selon l'une quelconque des revendications précédentes,
**caractérisé en ce**
**que** la tension de réseau de bord est mesurée au niveau d'un point de référence (18), en particulier au niveau d'une de l'au moins une source d'énergie ou au niveau d'une conduite d'amenée (19) associée à au moins un consommateur (8, 9) du groupe de sécurité ou un point de raccordement de cette conduite d'amenée (19).

8. Procédé selon l'une quelconque des revendications précédentes,
**caractérisé en ce**
**que** la tension du réseau de bord est mesurée par les consommateurs (6, 7, 8, 9) même, en particulier en utilisant une conduite de détection (20) au point de référence (18), et/ou une détermination de la tension de réseau de bord est effectuée par l'appareil de commande centrale (13) qui transmet la tension de réseau de bord aux consommateurs (6, 7, 8, 9) surveillant les valeurs seuil de tension (16).

9. Procédé selon l'une quelconque des revendications précédentes,
**caractérisé en ce**
**qu'**au moins un consommateur (9) influençant le châssis et/ou au moins un consommateur (8) influençant la direction et/ou au moins un consommateur influençant les freins sont utilisés comme consommateur (8, 9) susceptible de présenter un problème de sécurité.

10. Procédé selon l'une quelconque des revendications précédentes,
**caractérisé en ce**
**qu'**au moins un générateur-démarreur (5) est utilisé comme consommateur.

11. Véhicule automobile (21), comprenant un réseau de bord (1) avec au moins une source d'énergie électrique et au moins un consommateur (6, 7, 8, 9), dans lequel une partie des consommateurs (6, 7, 8, 9) appartient à un groupe de sécurité de consommateurs (8, 9) susceptibles de présenter un problème de sécurité, dont le fonctionnement doit aussi être assuré en cas de forte charge du réseau de bord (1), présentant au moins un dispositif de commande (12) réalisé pour la réalisation d'un procédé selon l'une quelconque des revendications précédentes.
